# EUROPÄISCHE PATENTSCHRIFT

(11) **EP 0 953 817 B1**
(45) Veröffentlichungstag und Bekanntmachung des Hinweises auf die Patenterteilung: **11.12.2002**
(21) Anmeldenummer: 99105449.5
(22) Anmeldetag: 17.03.1999
(51) Int. Cl.: F41A 9/01, B65G 47/76

(54) **Verfahren und Vorrichtung zur Steuerung einer Weiche für Fördergutsäule**
Process and device for controlling the switching point of a conveyor line
Procédé et dispositif pour le manoeuvre d'un aiguillage d'un convoyeur

(30) Priorität: 28.04.1998 CH 95398
(43) Veröffentlichungstag der Anmeldung: 03.11.1999
(73) Patentinhaber: OERLIKON CONTRAVES AG, 8050 Zürich (CH)
(72) Erfinder: Jometti, Alfredo, 8800 Thalwil (CH); Gerber, Robert, 8604 Volketswil (CH)
(74) Vertreter: Heusch, Christian

(56) Entgegenhaltungen:
- EP-B- 0 184 008
- US-A- 4 550 641

## Beschreibung

Die Erfindung betrifft ein Verfahren und eine Vorrichtung zur Steuerung einer Weiche für Fördergutsäulen, insbesondere Patronensäulen, wobei die Weiche zwei umschaltbare Weichensegmente aufweist, mittels welchen die Patronensäulen entweder einer Waffe zugeführt oder in einen Überlauf umgelenkt werden können.

Mit der Europäischen Patentschrift ***0 184 008 B1*** ist eine Weiche mit den im Oberbegriff genannten Merkmalen bekannt geworden. Die Weiche besteht aus zwei in Richtung der Patronenachsen verschliessbaren Segmenten, von denen wahlweise eines in die Bahn der Patronen hineinwagt. Die beiden Segmente sind an den Enden eines Waagebalkens angeleint, der in einem Gehäuse schwenkbar gelagert ist um zwangsläufig die beiden Segmente in entgegengesetzter Richtung zu verschieben. Durch zwei Druckfedern, die sich einerseits an einem Segment und andererseits am Gehäuse abstützen, kann das eine Segment in Wirkstellung und das andere Segment in seine unwirksame Stellung verschoben werden. Zur Betätigung der Segmente ist an dem einen Segment ein Betätigungskabel befestigt, womit dieses Segment entgegen der Kraft der Druckfedern in seine unwirksame Stellung geschoben werden kann. Zur Führung der Segmente sind im Gehäuse Führungszapfen befestigt, welche in Bohrungen der Segmente hineinragen, wobei die Segmente auf diesen Zapfen verschiebbar sind.

Die vorstehend beschriebene Weiche ist für hohe Fördergeschwindigkeiten nicht geeignet, da die für solche Geschwindigkeiten erforderliche Genauigkeit durch die vorgeschlagene Umschaltung mittels des Betätigungskabels nur schwerlich erreicht werden kann.

Der Erfindung liegt daher die Aufgabe zugrunde ein Verfahren und eine Vorrichtung der eingangs genannten Art derart zu verbessern, dass sehr schnell bewegte Patronensäulen unterbrochen und umgelenkt werden können.

Diese Aufgabe wird durch die in den Patentansprüchen **1** und **2** angegebene Erfindung gelöst. Hierbei werden das umzuschaltende Weichensegment und ein Abtasthebel im Zeitpunkt der Umschaltung in eine Warteposition geschaltet, in welcher der Abtasthebel das Weichensegment hält und die Patronensäule abtastet. Der Abtasthebel wird durch einen bei der Förderbewegung auftretenden Stoss einer Patrone der Patronensäule in eine Umschaltposition geschaltet, wobei das Weichensegment freigegeben und unter Federdruck gegen den Boden der Patrone geschoben wird. Im weiteren Verlauf der Förderbewegung gibt die Patrone das Weichensegment frei, so dass es unter Federdruck vor der nächsten Patrone auftauchen kann und die nachfolgenden Patronen umgelenkt werden.

Die mit der Erfindung erreichten Vorteile liegen insbesondere darin, dass ein Weichensegment bei sehr hoher Fördergeschwindigkeit des Fördergutes, beispielsweise einer Patronensäule, genau zwischen zwei Patronen gesteuert werden kann. Mit der vorgeschlagenen Lösung kann daher ein Feuerstoss bei einer Kadenz von bis zu sechstausend Schuss pro Minute problemlos unterbrochen werden. Die erfindungsgemässe Weiche weist eine hohe Funktionssicherheit auf, da sämtliche Zwischenstellungen des umzuschaltenden Weichenelementes - ausser der Warteposition - durch die Formgestaltung des Umschaltmechanismus versperrt sind. Die Formgestaltung ist derart, dass in der Warteposition ein vorzeitiges Umschalten, beispielsweise durch Vibrationen, verhindert wird.

Im folgenden wird die Erfindung anhand eines Ausführungsbeispieles im Zusammenhang mit der Zeichnung näher erläutert. Es zeigen:
- **Fig. 1**: eine Ansicht der erfindungsgemässen Weiche,
- **Fig. 2**: einen Schnitt entlang der Linie II - II in ***Fig. 1*** durch die Weiche,
- **Fig. 3**: einen Schnitt entlang der Linie III - III in ***Fig. 2*** durch die Weiche,
- **Fig. 4**: eine Ansicht einer Auslöseeinrichtung der Weiche aus Richtung A in ***Fig. 1*** gesehen, in grösserem Massstab,
- **Fig. 5**: eine Ansicht der Auslöseeinrichtung gemäss ***Fig. 4*** aus Richtung B in ***Fig. 1*** gesehen, in grösserem Massstab,
- **Fig. 6**: eine schematische Darstellung zweier Förderbahnen mit zwei Weichensegmenten,
- **Fig. 7**: eine schematische Darstellung eines Umschaltmechanismus der Weiche in einer Warteposition, und
- **Fig. 8**: eine schematische Darstellung des Umschaltmechanismus in einer umgeschalteten Position.

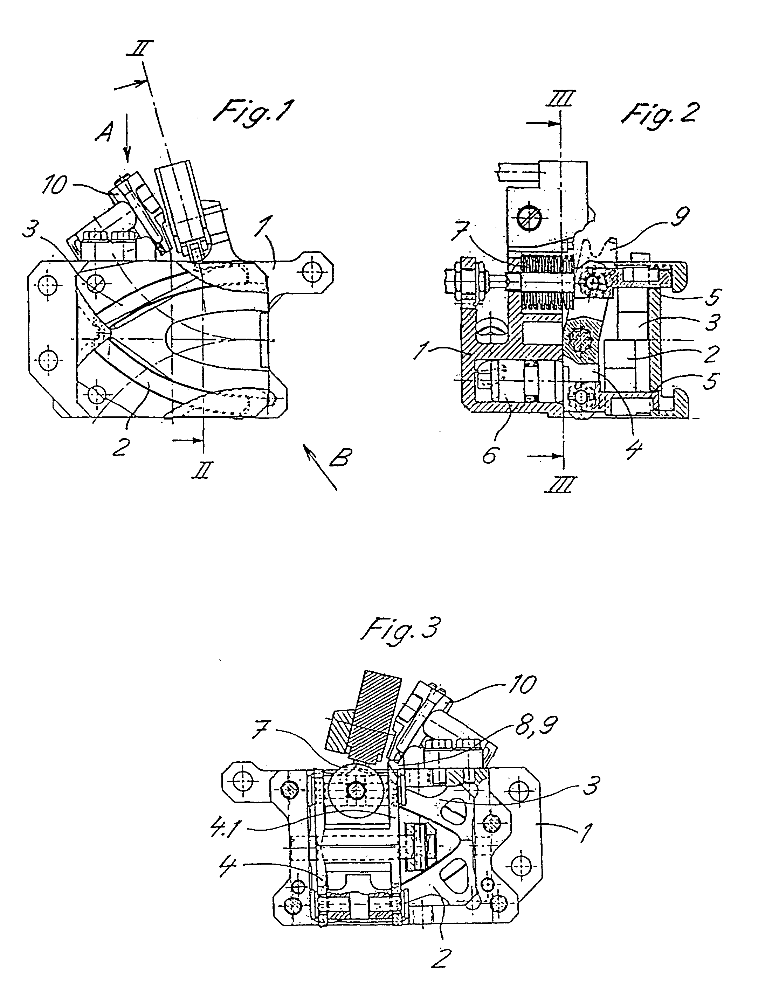

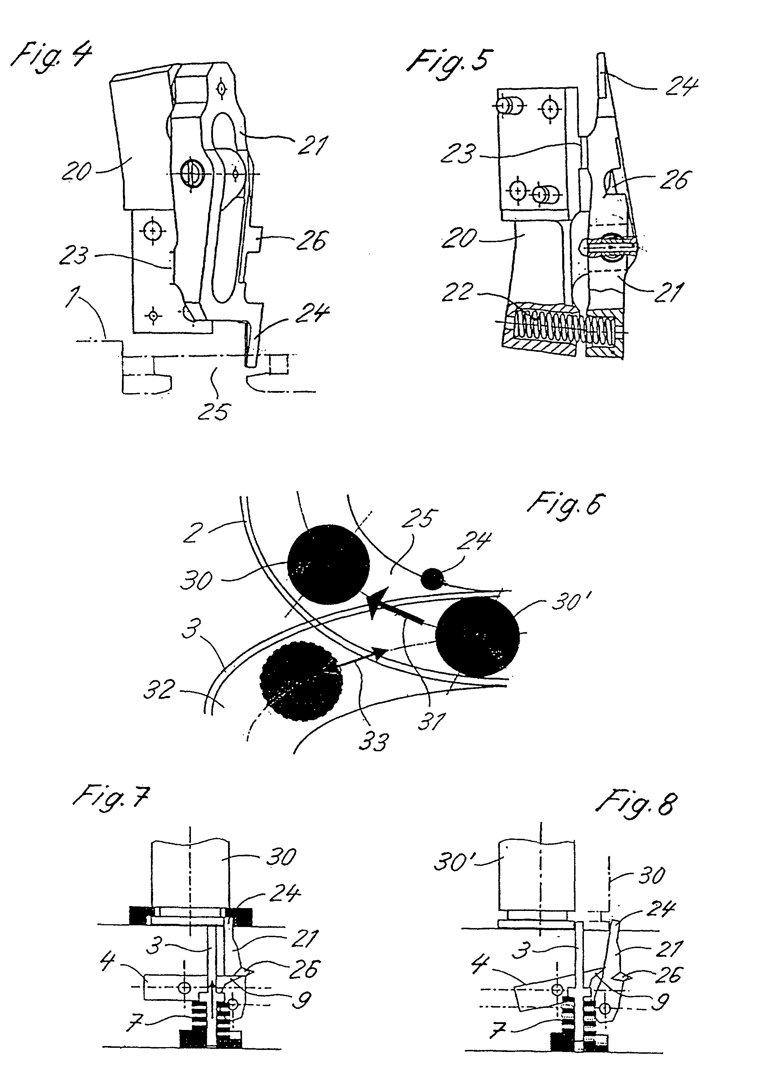

In den **Fig. 1** bis **3** sind mit **1** ein Gehäuse und mit **2** und **3** ein erstes und ein zweites Weichensegment bezeichnet. Die Weichensegmente **2, 3** sind gelenkig mit einem Schwenkhebel **4** verbunden und werden in Schlitzen **5** des Gehäuses **1** geführt. Der Schwenkhebel **4** ist schwenkbar im Gehäuse **1** gelagert. Im Gehäuse **1** ist ein hydraulisch antreibbarer Kolben **6** geführt, der am ersten Weichensegment **2** anliegt. Mittels des Kolbens **6** kann der Schwenkhebel **4** geschwenkt werden, wobei die angelenkten Weichensegmente **2, 3** in zueinander entgegengesetzten Richtungen verschoben werden. Am zweiten Weichenelement **3** liegt eine aus Tellerfedern zusammengesetzte Druckfeder **7** an, mittels welcher der Schwenkhebel **4** ebenfalls geschwenkt und die Weichensegmente **2,3** verschoben werden können. Ein Hebelarm **4.1** des Schwenkhebels **4** mit dem das zweite Weichensegment **3** gelenkig verbunden ist besitzt eine Verlängerung **8,** welche eine Mitnahmepartie **9** aufweist, die mit einer am Gehäuse **1** befestigten, nachstehend anhand der **Fig. 4** und **5** näher beschriebenen Auslöseeinrichtung **10** zusammenwirkt.

Gemäss den **Fig. 4** und **5** weist die Auslöseeinrichtung **10** ein Lagerteil **20** auf, an dem ein Abtasthebel **21** schwenkbar angeordnet ist. Der Abtasthebel **21** wird durch eine Druckfeder **22** gegen einen Anschlag **23** des Lagerteiles **20** gepresst. Am Abtasthebel **21** ist eine Abtastnase **24** vorgesehen, die in einer Abtaststellung in eine Förderbahn **25** hineinragt. Der Abtasthebel **21** weist ferner einen Ansatz **26** auf, der mit der Mitnahmepartie **9** des Schwenkhebels **4** in Eingriff gebracht werden kann.

In den **Fig. 6** bis **8** sind mit **30** und **30'** zwei Patronen einer Patronensäule bezeichnet, die sich bei aktivem ersten Weichensegment **2** in einer durch einen Pfeil **31** gekennzeichneten Richtung auf der Förderbahn **25** bewegen. Auf einer als Überlauf **32** dienenden zweiten Förderbahn kann sich die Patronensäule bei aktivem zweiten Weichensegment **3,** wie durch einen Doppelpfeil **33** gekennzeichnet, in beiden Richtungen bewegen. In den **Fig. 7** und **8** sind zum Zwecke einer übersichtlichen zweidimensionalen Darstellung der Funktion des Umschaltmechanismus die Teile **3, 4, 7, 9, 21, 24** und **26** in Form und Lage abweichend vom Ausführungsbeispiel gemäss **Fig. 1 bis 5** dargestellt.

Die vorstehend beschriebene Vorrichtung arbeitet wie folgt:

Im gewählten Zeitpunkt der Umschaltung der Weiche werden das umzuschaltende Weichensegment **3** und der Abtasthebel **21** in eine Warteposition geschaltet. Hierbei ragt die Abtastnase **24** des Abtasthebels **21** um einen kleinen Betrag in die Förderbahn **25** hinein (**Fig. 6** ) und der Ansatz **26** des Abtasthebels **21** ist mit der Mitnahmepartie **9** des Schwenkhebels **4** im Eingriff, so dass das Weichensegment **3** vom Abtasthebel **21** gehalten wird (**Fig. 7**). Wenn im Verlauf der Förderbewegung in Richtung des Pfeiles **31** die Patrone **30** der zu fördernden Patronensäule gegen die Abtastnase **24** stösst, werden der Schwenkhebel **4** und der Abtasthebel **21** entkoppelt, so dass der Abtasthebel **21** zurückweicht und eine Umschaltposition einnimmt (**Fig. 8**). Dadurch wird das unter Druck der Druckfeder **7** stehende Weichensegment **3** freigegeben und gegen den Boden der Patrone **30** geschoben. Im weiteren Verlauf der Förderbewegung gibt die Patrone **30** das Weichensegment **3** frei, so dass es vor der nächsten Patrone **30'** unter Federdruck auftauchen kann (**Fig. 8** ) und die nachfolgenden Patronen umgelenkt und in den Überlauf **32** gefördert werden (**Fig. 6**).

Das umgeschaltete Weichensegment **3** bleibt so lange in der Umlenkposition bis die in den Überlauf **32** geförderte Patronensäule wieder zurückgefördert wird und wieder die Startposition eingenommen hat.

Die erfindungsgemässe Weiche kann auch bei Förderstrecken für anderes Fördergut angewendet werden.

Es ist auch möglich mit dieser Weiche zwei Fördergutsäulen lückenlos zusammenzuführen.

## Patentansprüche

1. Verfahren zur Steuerung einer Weiche für Fördergutsäulen, insbesondere Patronensäulen, wobei die Weiche zwei umschaltbare Weichensegmente (**2, 3**) aufweist, mittels welchen die Patronensäulen entweder einer Waffe zugeführt oder in einen Überlauf (**32**) umgelenkt werden können,
***dadurch gekennzeichnet, dass***
das umzuschaltende Weichensegment (**3**) und ein Abtasthebel (**21**) im Zeitpunkt der Umschaltung in eine Warteposition geschaltet werden, wobei der Abtasthebel (**21**) in der Warteposition das Weichensegment (**3**) hält und die Patronensäule abtastet,
der Abtasthebel (**21**) durch einen bei der Förderbewegung auftretenden Stoss einer Patrone (**30**) der Patronensäule in eine Umschaltposition geschaltet wird, wobei das Weichensegment (**3**) freigegeben und unter Federdruck gegen den Boden der Patrone (**30**) geschoben wird und
im weiteren Verlauf der Förderbewegung die Patrone (**30**) das Weichensegment (**3**) freigibt, so dass das Weichensegment (**3**) unter Federdruck vor der nächsten Patrone (**30'**) auftauchen kann und die nachfolgenden Patronen umgelenkt werden.

2. Vorrichtung zur Durchführung des Verfahrens nach Anspruch **1**,
wobei in einem Gehäuse (**1**) ein erstes und ein zweites Weichensegment (**2, 3**) verschiebbar geführt und mit einem im Gehäuse (**1**) schwenkbar gelagerten Schwenkhebel (**4**) gelenkig verbunden sind, und wobei das zweite Weichensegment (**3**) unter der Einwirkung einer Druckfeder (**7**) steht,
***dadurch gekennzeichnet, dass***
ein Hebelarm (**4.1**) des Schwenkhebels (**4**) mit welchem das zweite Weichenelement (**3**) gelenkig verbunden ist eine Verlängerung (**8**) aufweist, an der eine Mitnahmepartie (**9**) vorgesehen ist, und dass am Gehäuse (**1**) eine Auslöseeinrichtung (**10**) für die Abtastung der Patronensäule angeordnet ist, wobei ein Ansatz (**26**) der Auslöseeinrichtung (**10**) mit der Mitnahmepartie (**9**) zusammenwirkt.

3. Vorrichtung nach Anspruch **2,**
***dadurch gekennzeichnet, dass***
die Auslöseeinrichtung (**10**) ein Lagerteil (**20**) aufweist, an dem ein Abtasthebel (**21**) schwenkbar angeordnet ist,
eine Druckfeder (**22**) vorgesehen ist, die den Abtasthebel (**21**) gegen einen Anschlag (**23**) des Lagerteiles (**20**) presst,
der Ansatz (**26**) am Abtasthebel (**21**) angeordnet ist, und
am Abtasthebel (**21**) eine Abtastnase (**24**) vorgesehen ist, die in einer Warteposition in eine Förderbahn (**25**) der Patronensäule hineinragt.

## Claims

1. A process for controlling a deflector for a conveyor line, in particular for cartridges, the deflector having two switchable deflector segments (2, 3) whereby the lines of cartridges can be either fed to a weapon or diverted into an overrun channel (32), **characterised in that,** at the moment of switching over, the deflector segment (3) to be switched over and a sensing lever (21) are moved to a waiting position, the sensing lever (21) holding the deflector segment (3) in the waiting position and sensing the cartridge line, the sensing lever (21) being moved into a switch-over position by the impact of a cartridge (30) in the cartridge line caused by the feed movement, whereby the deflector segment (3) is released and pushed under spring pressure against the base of the cartridge (30) and in the further course of the feed movement the cartridge (30) vacates the deflector segment (3) so that the deflector segment (3) can move up under spring pressure before the next cartridge (30') and the following cartridges are diverted.

2. A device for implementing the process according to Claim 1, whereby a first and second deflector segment (2,3) are displaceably guided in a housing (1) and are pivoted to a swivelling lever (4) pivotably mounted in the housing (1) and the second deflector segment (3) is acted upon by a compression spring (7), **characterised in that** a lever arm (4.1) of the swivelling lever (4) to which the second deflector element (3) is pivoted has a prolongation (8) on which a slave member (9) is provided, and **in that** a trigger arrangement (10) for sensing the cartridge line is arranged on the housing (1), a catch (26) on the trigger arrangement (10) cooperating with the slave member (9).

3. A device according to Claim 2, **characterised in that** the trigger arrangement (10) has a bearing part (20) on which a sensing lever (21) is pivotably arranged, a compression spring (22) which presses the sensing lever (21) against a stop (23) on the bearing part (20) is provided, the catch (26) is arranged on the sensing lever (21) and a sensing projection (24) which in a waiting position projects into a feed path (25) of the cartridge line is provided on the sensing lever (21).

## Revendications

1. Procédé de guidage d'un dispositif d'aiguillage pour colonnes d'éléments à transporter, en particulier des colonnes de cartouches, le dispositif d'aiguillage comprenant deux segments d'aiguillage basculants (**2, 3**) à l'aide desquels les colonnes de cartouches peuvent soit être amenées à une arme, soit être déviées dans un dispositif d'évacuation (**32**),
**caractérisé en ce que**
le segment d'aiguillage basculant (**3**) et un levier d'analyse (**21**) sont manoeuvrés, au moment du basculement, dans une position d'attente, le levier d'analyse (**21**) arrêtant le segment d'aiguillage (**3**) dans la position d'attente et analysant la colonne de cartouches,
le levier d'analyse (**21**) est manoeuvré dans une position de basculement par une impulsion d'une cartouche (**30**) de la colonne de cartouches survenant lors du transport, le segment d'aiguillage (**3**) étant ainsi libéré et poussé contre le fond de la cartouche (**30**) sous l'effet d'un ressort et
la cartouche (**30**) libère le segment d'aiguillage (**3**) dans la suite du transport, de sorte que le segment d'aiguillage (**3**) peut réapparaître, sous l'effet du ressort, devant la prochaine cartouche (**30'**) et que la direction des cartouches suivantes peut être changée.

2. Dispositif servant à réaliser le procédé conforme à la revendication **1**,
un premier et un deuxième segment d'aiguillage (**2,3**) étant placé(s) de façon amovible dans un boîtier (**1**) et relié(s) de façon articulée avec un levier pivotant (**4**) placé de façon orientable dans le boîtier (**1**), et le deuxième segment d'aiguillage (3) subissant l'action d'un ressort à pression (**7**),
**caractérisé en ce que**
un bras de levier (**4.1**) du levier pivotant (**4**) avec lequel le deuxième élément d'aiguillage (**3**) est relié de façon articulée comporte un prolongement (**8**) sur lequel est prévu un élément d'entraînement (**9**), et **en ce qu'**un dispositif de déclenchement (**10**) est disposé sur le boîtier (**1**) pour l'analyse de la colonne de cartouches, une pièce saillante (**26**) du dispositif de déclenchement (**10**) agissant de concours avec l'élément d'entraînement (**9**).

3. Dispositif conforme à la revendication **2**,
**caractérisé en ce que**
le dispositif de déclenchement (**10**) comporte un élément d'appui (**20**) sur lequel est placé un levier d'analyse de façon orientable (**21**),
un ressort à pression (**22**) est prévu, poussant le levier d'analyse (**21**) contre une butée (**23**) de l'élément d'appui (**20**),
la pièce saillante (**26**) est placée sur le levier d'analyse (**21**), et
un taquet d'analyse (**24**) est prévu sur le levier d'analyse (**21**) et avance, en position d'attente, dans une voie de transport (**25**) de la colonne de cartouches.
